# EUROPEAN PATENT SPECIFICATION

(11) **EP 0 813 981 B1**
(45) Date of publication and mention of the grant of the patent: **04.12.2002**
(21) Application number: 97304140.3
(22) Date of filing: 13.06.1997
(51) Int. Cl.: B60C 11/14, B60C 11/16

(54) **A tyre stud and rubber composition therefor**
Spike für Luftreifen und Kautschukmischung dafür
Crampon pour pneumatique et composition de caoutchouc pour sa production

(30) Priority: 17.06.1996 JP 15588796
(43) Date of publication of application: 29.12.1997
(73) Proprietor: SUMITOMO RUBBER INDUSTRIES LIMITED, Kobe-shi, Hyogo-ken (JP)
(72) Inventor: Kikuchi, Naohiko, Kobe-shi, Hyogo 651-21 (JP); Komatsuki, Masato, Takasago-shi, Hyogo 676 (JP)
(74) Representative: Stewart, Charles Geoffrey

(56) References cited:
- EP-A- 0 320 215
- EP-A- 0 383 401
- CH-A- 565 055
- PATENT ABSTRACTS OF JAPAN vol. 097, no. 003, 31 March 1997 & JP 08 300911 A (BANDO CHEM IND LTD), 19 November 1996,
- PATENT ABSTRACTS OF JAPAN vol. 018, no. 620 (M-1711), 25 November 1994 & JP 06 239112 A (HIDEAKI KIN;OTHERS: 01), 30 August 1994,

## Description

The present invention relates to a tyre stud, rubber composition and a tyre incorporating said stud having excellent running performance on snow or ice covered roads.

A tyre including a tyre stud embedded in the tread of a tyre body is made of metal.

However, a metal stud damages the road or pavement surface and so there are problems in that the pavement often must be repaired, and that a large amount of powder dust which is scraped off the pavement causes great environmental contamination. Therefore, the use of metal studs is gradually severely being restricted and already in Japan is to be prohibited.

A metal stud is much harder than an asphalt pavement and therefore scrapes it off. Thus, various types of rubber or resin studs, of which the constituent materials are changed from metals to rubbers or resins that are softer than metals, have been developed to overcome the above-mentioned problems.

The rubber or resin stud gives almost no damage to pavements.

However, the rubber or resin stud contains soft rubber or resin and therefore is abraded more easily than the tyre tread rubber, so the rubber or resin pin wears off earlier than the tread. Therefore, a tyre that is spiked with a rubber or resin stud loses grip on snow and ice covered roads.

The document JP-A-6 239 112 disclose a tyre stud, a rubber composition for such stud and a tyre using such stud according to the features of the preamble of claims 1, 5 and 6, respectively.

It is an object of the present invention to provide a tyre stud that keeps its grip strength for a long period of time without damaging pavements; a production process for the stud; a rubber composition for the stud; and a tyre for snow and ice using the stud.

According to a first aspect of the invention a tyre stud, which is a moulded product of a vulcanised rubber and is reinforced with short fibres, is characterised in that the short fibres have a diameter of 1 to 50 µm, a length of 100 to 3,000 µm, and an aspect ratio of 10 to 500, and are oriented substantially vertically to a ground-contacting face of the stud.

Here, the phrase "substantially vertically" means that the reinforcing short fibre is oriented at up to tilt angles of ±10° to a line perpendicular to the ground-contacting face of the pin.

A second aspect of the invention provides a process for producing an anti-slip stud, according to the present invention, characterised by the steps of extruding a rubber composition from a die having a diameter of 8 mm or less; cutting the resultant thin-pole-shaped product into a length of about 9 to 14.5 mm; placing the resultant short cut product into a mould; and vulcanising the short cut product in the mould, wherein the rubber composition comprises a rubber component and reinforcing short fibres which have a diameter of 1 to 50 µm, a length of 100 to 3,000 µm, and an aspect ratio of 10 to 500.

A third aspect of the invention provide a rubber composition for producing the above-mentioned anti-slip stud, comprising a rubber component and a reinforcing short fibre characterized in that said fibers which have a diameter of 1 to 50 µm, a length of 100 to 3,000 µm and an aspect ratio of 10 to 500.

A fourth aspect provides a tyre for snow and ice, characterised by a ring-shaped tyre body; holes which are provided at intervals on a ground-contacting face of the tyre; and the above-mentioned anti-slip studs of the present invention, embedded in the holes and projected partially there from.

These and other objects and the advantages of the present invention will be more fully apparent from the following detailed disclosure by way of example only in conjunction with the attached diagrammatic drawings, in which:
Figure 1 is a perspective of an embodiment of an anti-slip stud according to the present invention;
Figure 2 is a longitudinal section of the stud of Figure 1;
Figure 3 is a cross section vertical to the axial part of Figure 1;
Figure 4 is a perspective view of an embodiment of a tyre for snow and ice according to the present invention; and
Figure 5 is a partial longitudinal section of Figure 4, showing a state of the contact of the tyre with the ground.

The anti-slip stud of the present invention is a moulded product of a vulcanised rubber reinforced with short fibres, wherein the reinforcing short fibre is oriented almost vertically to a ground-contacting face of the pin.

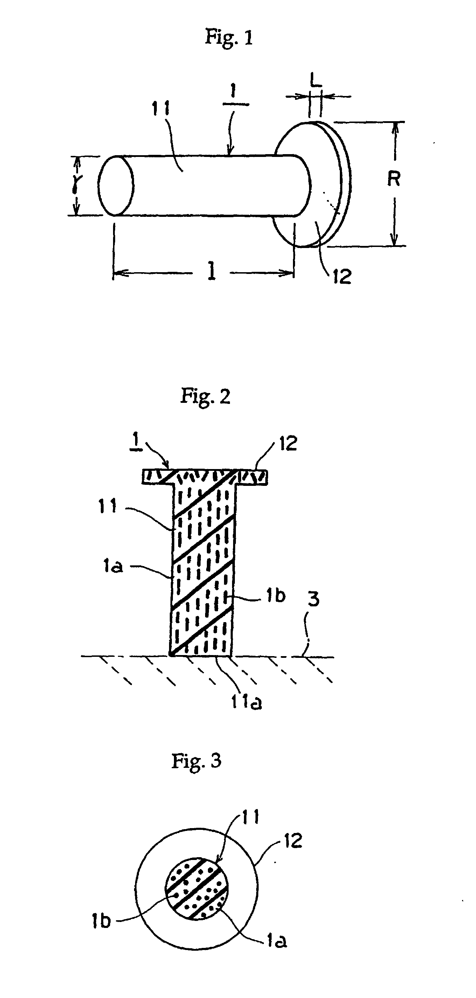

As is seen in Figure 1, this stud 1 has the shape of a nail comprising an axial part 11 and a sword-guard-shaped head part 12, and when the axial part 11 contacts a pavement, a tyre with the stud thereby provides grip performance. The axial part 11 is reinforced with short fibres 1b, oriented substantially vertically to the ground-contacting face of the pin, which therefore only wear off very slowly. When fitted into holes that are provided at intervals around the ground-contacting face of a tyre, the head part 12 is anchored in the back of the hole, thus preventing the pin from falling out of the tyre body.

Figure 2 well shows the state where the reinforcing short fibre 1b is oriented in a matrix, comprising a vulcanised rubber 1a, vertically to the ground-contacting face 11a of the pin 1. However, the orientation angle (vertical orientation degree) is permitted to vary to ±10° to a line perpendicular to the ground-contacting face 11a. The method for measuring this vertical orientation degree is not especially limited, but examples thereof include a method in which the axial part 11 of the pin 1 is cut along an axis thereof, and the resultant section is observed with an SEM (Scanning Electron Microscope).

Because, as mentioned above, the reinforcing short fibre 1b is oriented substantially vertically to the ground-contacting face 11a of the stud 1, the reinforcing action and the abrasion-resistant action of the short fibre 1b are sufficiently displayed, so the abrasion of the stud 1 due to the contact with the ground is greatly suppressed.

The shape of the head part is not especially limited and, for example, may be lumpish. Although the anti-slip stud may have no head part, the possessing of the head part favourably makes it sure to prevent the stud from falling off the tyre body. The sectional shape of the axial part of the stud is not especially limited, either. Although, as is shown in Figure 3, the sectional shape of the axial part of the stud is a true circle in the above-mentioned embodiment, the shape may be polygonal or oval.

The measurement relation of the stud is illustrated as follows: the length of the axial part (1), the diameter of the axial part (r), the length of the head part (L), and the diameter of the head part (R), as shown in Figure 1, are, for example, in the ranges of 1 = 7 to 11 mm, r = 4 to 6 mm, L = 1 to 2 mm, and R = 7 to 9 mm, respectively. However, there is no especial limitation. These measurement can be adequately set, for example, depending on the materials of the tyre body of the types of automobiles to which the stud is applied.

The measurement relation of the reinforcing short fibre is illustrated as follows: the diameter (D), the length (L), and the aspect ratio (L/D) are in the ranges of D = 1 to 50 µm, L = 100 t0 3,000 µm, and L/D = 10 to 500, respectively. Preferably measurements of the short fibre comprise a diameter of 5 to 20 µm. A length of k300 to 1,500 µm, and an aspect ratio of 30 to 200. Where either or both of the diameter and the length of the short fibre are more than the above-mentioned ranges, the short fibre only has so poor dispersibility that it serves as a nucleus to fracture the vulcanised rubber and to cause it to chip, and therefore deteriorates the reinforcement property of the fibre and the abrasion resistance of the anti-slip stud. Where either or both of the diameter and the length of the short fibres are less than the above-mentioned ranges, the short fibre only has poor dispersibility, too, so the quality of the stud is not stable. Where the aspect ratio is more than k500, the short fibre only has poor dispersibility, too, so the short fibre is difficult to orient in the desired direction. After all, if the measurement relation of the short fibre is in the above-mentioned preferable range, the short fibre has so good dispersibility in the vulcanised rubber that the short fibre sufficiently reinforces the stud and thereby greatly enhances the abrasion resistance of the stud.

The material of the rubber component to form the vulcanised rubber, as well as the material of the reinforcing short fibre, will be mentioned later.

The process for producing the anti-slip stud is not especially limited, but is preferably carried out as follows.

A preferable process comprises the steps of extruding the below-mentioned rubber composition for a stud from a die with a diameter of 8 mm or less into the shape of a rod or pole; cutting the resultant pole-shaped product short, and vulcanising the resultant cut product in a mould. Such a process can easily produce the above-mentioned anti-slip stud of the present invention.

The structure of the extruder is not especially limited. If the diameter of the die of the extruder is 8 mm or less, the short fibre can easily and surely be oriented in a direction of the extrusion, thus orienting the short fibre substantially vertically to the ground-contacting face of the stud. The extruded produce, as obtained in such a way, is cut in accordance with the mould measurements, placed into a mould of the shape of a desired stud, and vulcanised by heating and pressuring, thus obtaining a stud. Conditions for the vulcanisation are, for example, as follows: the temperature is about 150°C, and the duration is about 30 minutes.

The rubber composition for the stud, according to the present invention, comprises a rubber component and a reinforcing short fibre as essential components.

The rubber component is exemplified by natural rubber, diene-based synthetic rubbers such as styrene-butadiene rubber (SBR), butadiene rubber (BR), and isoprene rubber (IR),and polynorbornene resins. These rubber components may be used alone, respectively, or, if necessary, in combinations of two or more thereof.

The material of the short fibre is not especially limited, but examples thereof are as follows: nylon, polyester, rayon, aramid such as KEVLAR™, vinlyon, cotton. These material may be used alone, respectively, or, if necessary, in combinations of two or more thereof. The measurement relation of the short fibre is aforementioned. It is preferably for improving the adhesion (affinity) between the short fibre and the rubber component (vulcanised rubber) and thereby enhancing the abrasion resistance of the stud that a surface of the short fibre is treated, for example, with a mixed solution of a resorcin-formalin precondensation product and a latex (RFL). The treatment of a surface of the short fibre is, for example, carried out by a method in which the sort fibre is immersed into the RFL and then dried at about 220 to about 240°C for about 5 to about 10 minutes.

The amount of the combination of the short fibre is not especially limited, but is preferably in a range of 10 to 30 parts by weight, more preferably, 20 to 30 parts by weight, relative to 100 parts by weight of rubber composition. Where the amount of the combination of the short fibre is smaller than 10 parts by weight, the abrasion resistance and the tyre grip strength are both low. Where the amount of the combination of the short fibre is larger than 30 parts by weight, the processability is poor, the strength of the stud as obtained by vulcanisation is low, and rubber chipping can be caused. In other words, if the amount of the combination of the short fibre is in the above-mentioned preferable ranges, the processability is good, and the abrasion resistance and the tyre grip strength can be both easily maintained for a long period of time.

The rubber composition for a stud, according to the present invention, may further comprise reinforcing fillers other than the short fibre in order to further improve the reinforcing ability. Example of other reinforcing fillers are powders comprising carbon black or white fillers such as silica, clay, talc, calcium carbonate, basic magnesium carbonate, and alumina. The amount of the combination of these fillers is not especially limited, and the necessary amount can be adequately used.

If need arises, the rubber composition for a stud, according to the present invention, may further comprise, for example, the following additives: softeners such as naphthene-based process oil, covulcanisers (vulcanisation activators) such as zinc oxide and stearic acid, vulcanisation accelerators such as thiazole-based ones (e.g. mercaptobenzothiazole (MBT), dibenzothiazyl disulfide (MBTS), N-tert-butyl-2-benzothiazolylsulfenamide (TBBS), N-cyclohexyl-2-benzothiazylasulfenamide (CBS), and hexamethylenetetraamine (HMT), sulfur, foaming agents, antioxidants, additives such as wax, thermosetting resins such as hardeners for rubber. The amount of the combination of these additives is not especially limited, and the necessary amount can be adequately used. Of the above-mentioned additives, the thermosetting resins are added to the rubber composition in order to enhance the hardness of the stud.

The process for producing the present invention rubber composition for a stud can be carried out by conventional methods, for example, a method in which the above-mentioned starting materials for the rubber composition are mixed together by mixing with rubber-kneading mixers such as Banbury mixers and kneaders in accordance with JIS K6299.

The tyre for snow and ice according to the present invention, comprises a ring-shaped tyre body, holes, which are provided at intervals in the ground-contacting face of the tyre, and anti-slip studs, which are embedded in the holes with respective parts of the anti-slip studs projecting a short distance from the holes. The anti-slip studs as used in this tyre are the above-mentioned ones according to the present invention.

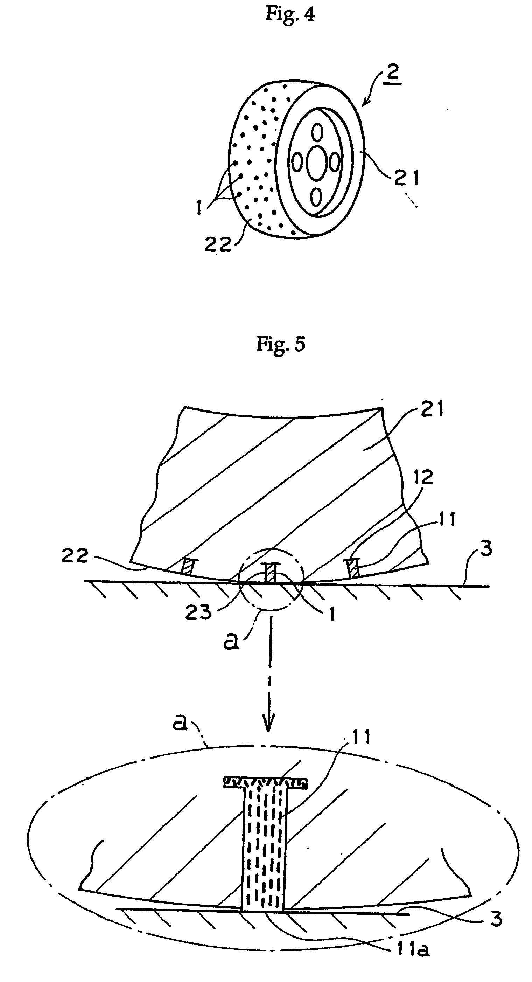

Figures 4 and 5 show an embodiment of the tyre for ice or snow according to the present invention. The tyre for snow and ice 2 has a ring-shaped tyre body 21, and the outer peripheral face of the tyre is a ground-contacting face 22 which will contact the ground. A plurality of holes 23... to drive studs into are opened at adequate intervals on the ground-contacting face, and the aforementioned anti-slip studs 1 are embedded in the holes with the respective axial parts 11 of the anti-slip studs projecting a short distance from the holes. The hoses 23... can be opened, for example, by a method in which projections are formed at corresponding positions, where the studs will be embedded, of a mould for shaping the tyre body 21. The method for embedding the studs into already-opened holes... is not especially limited, but an example thereof is a method in which the anti-slip studs 1 are driven into the holes 23... of the tyre body 21 with a spike or studding gun. The embedding of the studs 1 can be carried out not only by a method in which holes are beforehand opened on the tyre body, but also by a method in which the studs 1 and the tyre body 21 are made- into one body at the same time as the tyre body 21 is shaped.

At the position "a" in Figure 5, the ground-contacting face 22 of the tyre body 21 contacts with the ground 3, and when the anti-slip stud 1 is located at this position, the axial part 11 of the anti-slip stud 1 is oriented vertically to the ground 3. Because the short fibres 1b... are oriented substantially vertically to the ground-contacting face 22 in the axial part 11 (Fig.2), they are also oriented substantially vertically to the ground 3. Thus, as to the anti-slip stud 1, because the short fibres 1b... are always oriented substantially vertically to the ground 3, the reinforcing action due to the short fibres 1b... are surely and sufficiently displayed, so that the abrasion resistance of the stud 1 is greatly enhanced. Therefore, abrasion wear of the stud 1 due to contact with the ground is greatly suppressed, so the anti-slip stud 1 can keep its grip strength on snow and ice tyres for a long period of time.

The number of anti-slip studs that are embedded on the ground-contacting face of the tyre is not especially limited, but is preferably in a range of 4 to 6 per unit area (about 170 cm²) of the ground-contacting face. Where the number of studs is more than 6, the ground-contacting face of the tyre directly contacts the ground with difficulty, so the grip strength of the tyre is liable to decrease. On the other hand, where the number of studs is less than 4, the grip performance of the tyre due to the studs might not sufficiently be displayed. However, if the number of studs is in the range of 4 to 6, good balance between the grip strength of the tyre tread rubber and that of the studs can easily be obtained.

The length of the projection of the anti-slip studs from the ground-contacting face of the tyre is not especially limited, but is preferably in a range of 0.2 to 1.5 mm, because, where the length is more than 1.5 mm, the ground-contacting face of the tyre directly contacts the ground with difficulty and the grip strength of the tyre is decreased, and because, where the length is less than 0.2 mm, the grip performance of the tyre due to the studs is not sufficient.

The process for producing the tyre is not especially limited, but is generally carried out by the aforementioned first method, namely, a method in which a tyre body having stud holes opened on the ground-contacting face is produced with a mould having a plurality of hole-opening projections on the inner peripheral face, and anti-slip studs are than driven into the above-mentioned holes with tools such as spike or stud guns. When needed, the studs may be fixed in the holes with materials such as adhesives.

The present invention can ensure the abrasion resistance of an anti-slip stud in a tyre for snow and ice for a long period of time without damaging the pavement and enhances the grip strength of the tyre.

Hereinafter, the present invention is more specifically illustrated by the following examples of some preferred embodiments in comparison with comparative examples not according to the invention. However, the present invention is not limited to the below-mentioned examples. In addition, the unit of the combinations of the raw materials for the rubber compositions is "part(s) by weight".

### EXAMPLE 1

Raw materials were mixed together in the combination, as shown in Table 1, by kneading them in a Banbury mixer, thus obtaining a rubber composition for a stud.

This rubber composition was extruded into the shape of a thin column with a small size extruder 4.5-inch extruder made by Nakata Engineering Co Limited, revolution speed: 10 rpm, extrusion temperature: 90°C, line speed: 30 m/minute, die diameter: 6 mm) and then cut into lengths of 13 mm. The cut product was vulcanised in a mould with an electrothermal vulcanisation press (made by Shinto Metal Co Limited, vulcanisation duration: 30 minutes, vulcanisation temperature: 150°C), thus obtaining an anti-slip stud. In this stud, the reinforcing short fibre was oriented substantially vertically to the end face of the pin, which face would be the ground-contacting face in the below-mentioned tyre. The measurements of the stud were as follows: length of axial part (1) = 10.5 mm, diameter of axial part (r) = 4.8 mm, length of head part (L) = 1.5 mm, diameter of head part (R) = 8.0 mm. The hardness of the stud, as measured at room temperature in accordance with JIS-A, was 98.

The resultant stud was driven into stud holes in a tyre body of 175/70R13 with a spike gun. The resultant tyre was put on a 1,600 cc class front drive car, and this car was then run 100 km at a low speed, thus stabilising the studs. As a result, the length of the projection of the studs from the ground-contacting face of the tyre was 1.2 mm. The performance of the tyre was evaluated in the below-mentioned way, and results thereof are collectively shown in Table 1.

Next the 1,600 cc class front drive car, as equipped with the above-mentioned tyre, was run 5,000 km on a dry pavement in a mode including acceleration, deceleration, and cornering, and the performance of the tyre was evaluated in the same way. Results thereof are shown in Table 1.

### COMPARATIVE EXAMPLE 1

A comparative rubber composition for a stud was obtained in the same combination and under the same production conditions as Example 1 except that no reinforcing short fibre was combined into the composition.

A comparative anti-slip stud was obtained by vulcanising the above-mentioned comparative rubber composition under the same conditions as of Example 1. The hardness of this pin, as measured at room temperature in accordance with JJIS-A, was 95.

The above-obtained comparative stud was driven into a tyre body in the same way as of Example 1, thus obtaining a comparative tyre. The performance of this tyre was evaluated in the same way as of Example 1. Results thereof are collectively shown in Table 1.

Next, a 1,600 cc class front drive car, as equipped with the above-mentioned comparative tyre, was run 5,000 km on a dry pavement in a mode including acceleration, deceleration, and cornering, and the performance of the tyre was evaluated in the same way. Results therefor are shown in Table 1.

### COMPARATIVE EXAMPLE 2

A tyre for snow and ice was produced in the same way as of Example 1 except that no stud was driven into the tyre body. The performance of this tyre was evaluated. Results thereof are shown in Table 1.

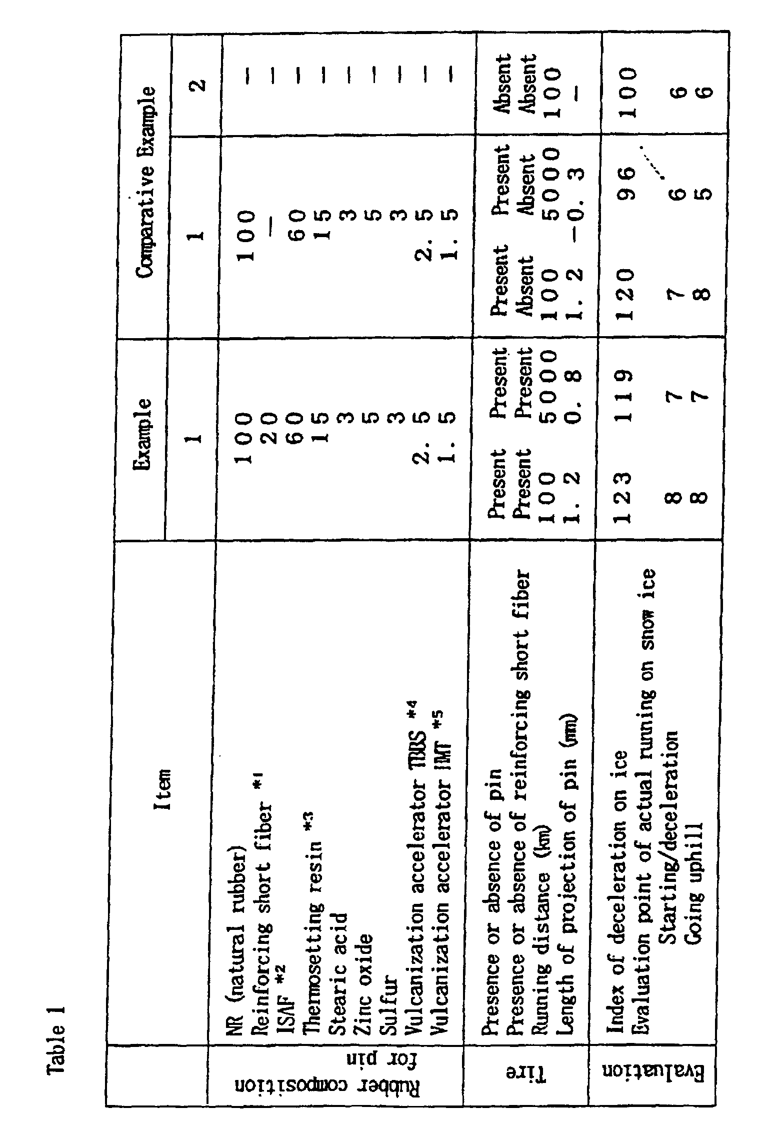

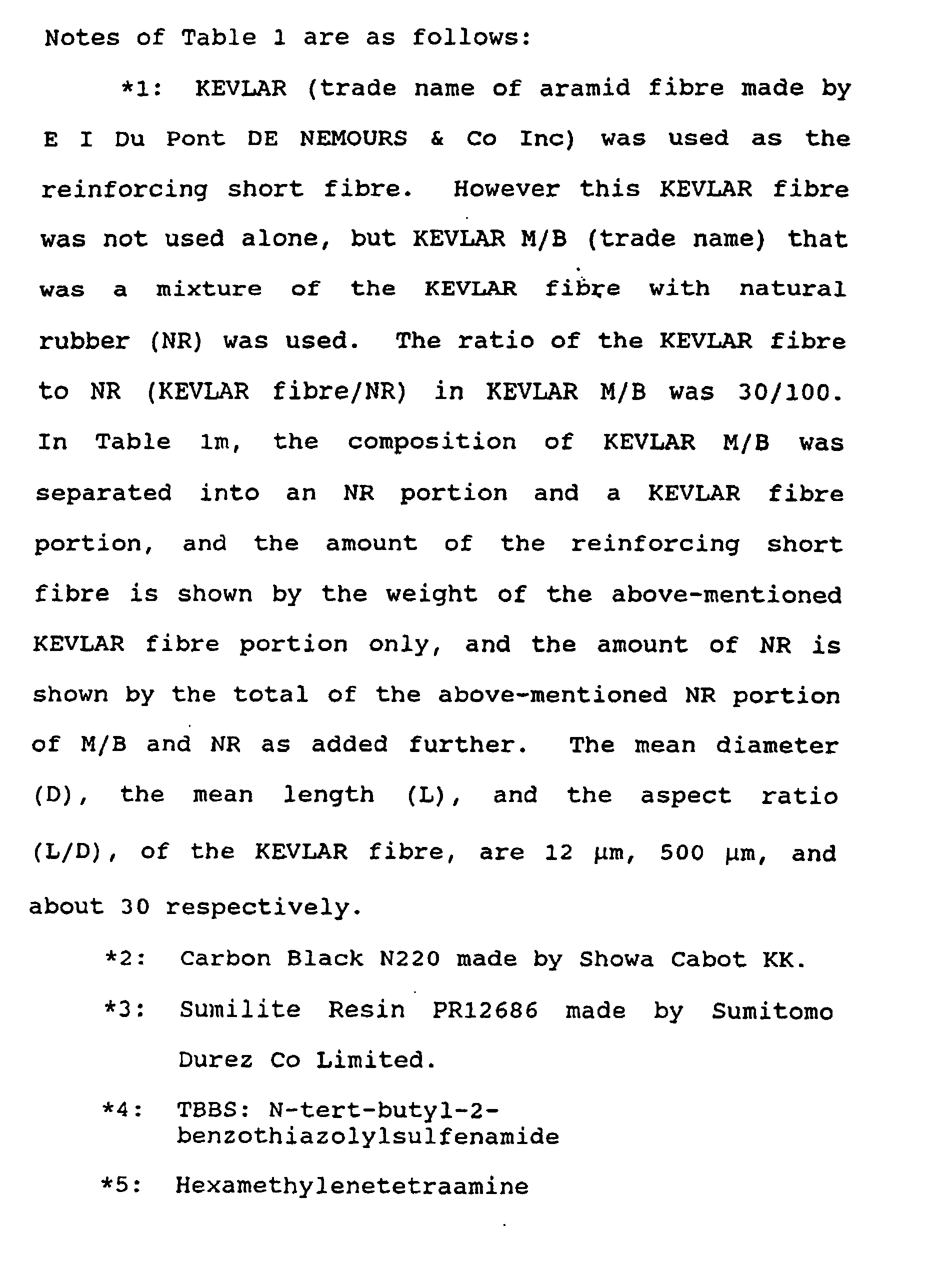

The evaluation of the respective tyres, according to the Examples and the Comparative Examples, was carried out in the following way.

### Index of deceleration on ice:

This index was determined from the deceleration when the tyre was lock-decelerated at an initial velocity of 30 km/h on an ice floe measurement pavement in the Nayoro Test Course, Hokkaido Prefecture, Japan, of Sumitomo Rubber Industries Limited. The index for the stud-free of Comparative Example 2 was regarded as 100. The larger value of the index shows a larger deceleration. In addition, the below-mentioned ice floe hardness was measured with a CTI compaction gauge.

Ice floe temperature during the measurement: -5°C.
Ice floe hardness: 95

### Evaluation of actual running on ice

A feel test of the actual running was carried out on a circuit of compressed snow and ice floe and on an uphill road, including compressed snow 15% and ice 4%, on the above-mentioned test course. The starting and deceleration abilities were evaluated on the circuit, and the ability to go uphill was evaluated on the uphill road. The stud-free tyre of Comparative Example 2 was regarded as the standard (6 points) to mark evaluation points. The larger value of the point shows the better performance.

If the evaluation results of Example 1 are compared with those of Comparative Example 2 in Table 1, it can be seen that the tyre grip performance on snow and ice of the Example 1 tyre is higher than that of the Comparative Example 2 tyre.

From the comparison of the evaluation results of Example 1 with those of Comparative Examples 1 and 2, it is seen that the tyre of Example 1 provided good results with regard to initial performance, while the tyres of Comparative Examples 1 and 2 provided inferior results.

Next, from the comparison of Example 1 with Comparative Example 1 with regard to the evaluation results after the 5,000 km running, it can be seen as follows. As to Example 1, the long-term use of the tyre caused an abrasion of 0.4 mm at the tip end of the stud, but the stud still projected sufficiently from the ground-contacting face of the tyre. From this results, it should be understood that if a rubber component of a stud is reinforced with short fibre, the stud kept its good performance for a long period of time. On the other hand, as to Comparative Example 1, the stud was abraded due to the long-term use to such a large extent that the tip end of the stud was embedded in the tyre a little. From this results, it is clear that a stud without any reinforcing short fibre only has poor abrasion resistance and therefore cannot keep its performance for a long period of time, so the grip strength if a tyre including such a pin deteriorates rapidly with time as the tyre is used.

### EXAMPLES 2 TO 7 AND COMPARATIVE EXAMPLES 3 TO 5

Next, the performance of respective studs of these examples was tested in the same way as of Example 1 except that the type of short fibre in the rubber composition and the vertical orientation degree of the short fibre in the stud were changed to show shown in Table 2. The raw materials were the same as of Example 1 except that only the reinforcing short fibre as used in Example 7 was Vinylon KII made by Kuraray Co Limited, and that no short fibre was used in comparative Example 3. The respective rubber compositions, except that of Comparative Example 3, were prepared using masterbatches that were mixtures of short fibres and NR (short fibre/NR = 30/100), with the short fibres having diameters, lengths, and aspect ratios as shown in Table 2. However, the test course for the actual running was change to a skating rink. I these examples, the degree of the damage of the steel stud or pavement was also evaluated. Results are collectively shown in Table 2, where the number of studs is that per unit area (170 cm²).

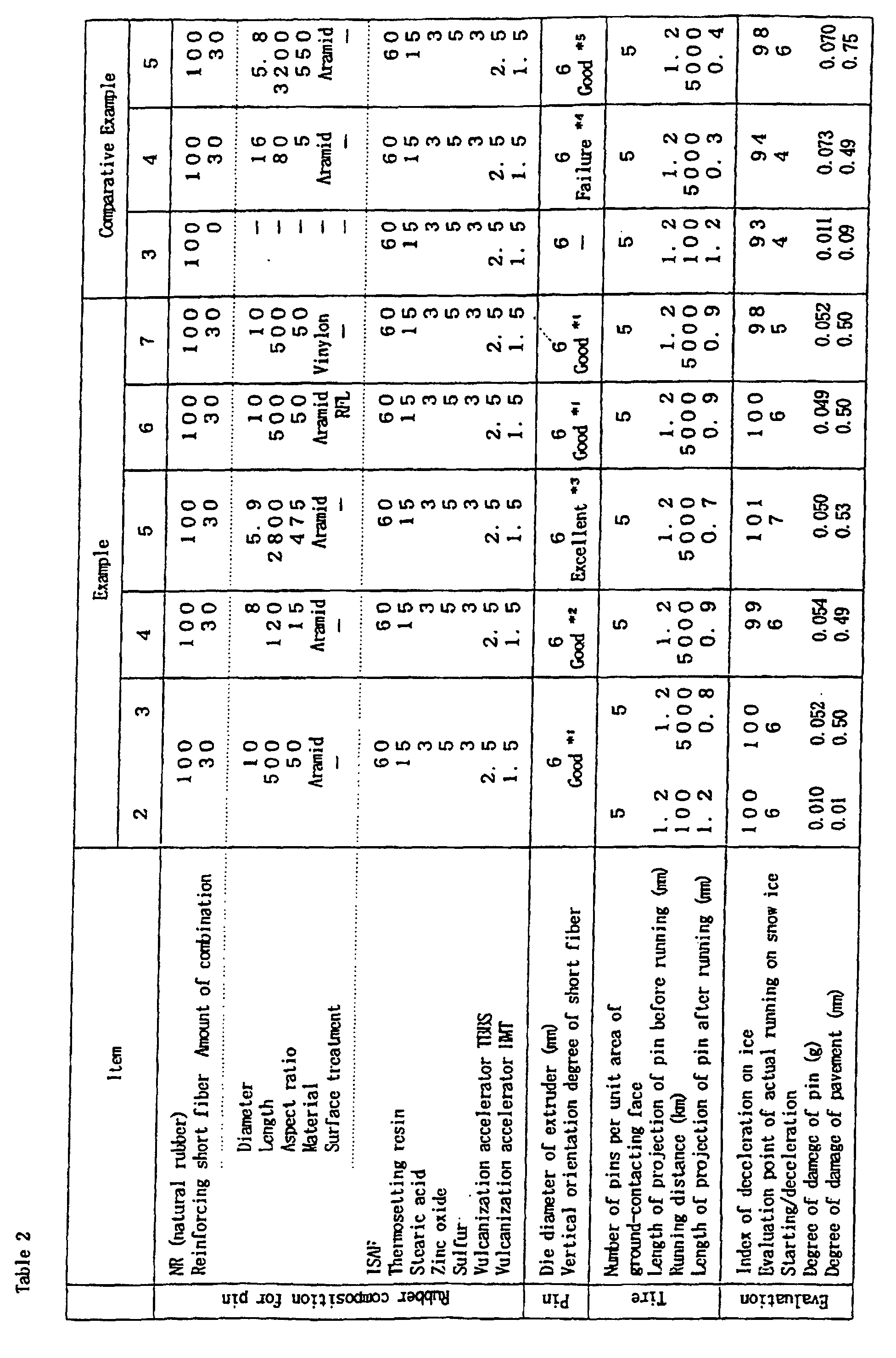

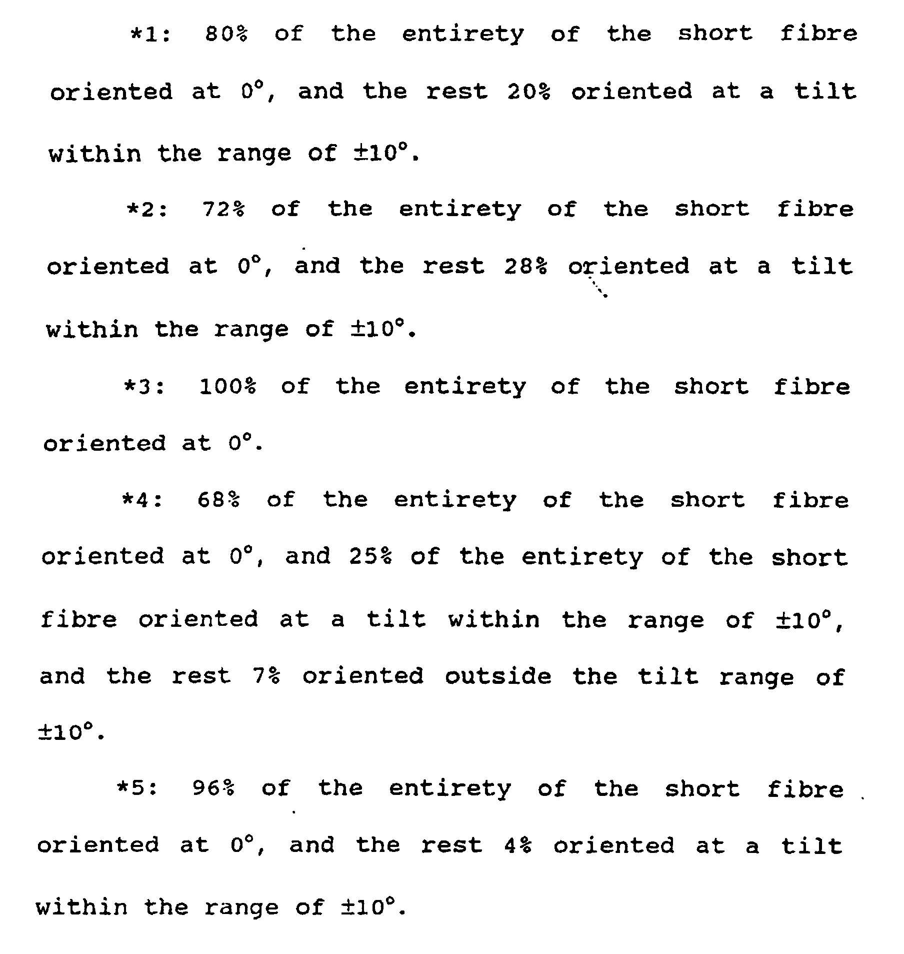

The index of the deceleration on ice was evaluated by regarding Example 2 as 100 (in which the car stopped at a distance of 10 m from a braking initiation point), and the evaluation of the actual running (starting/deceleration). on ice was made by regarding Example 2 as 6 points. The larger numerical value shows the better performance. The vertical orientation degree of the short fibre, the degree of damage of the stud, and the degree of the damage of the pavement were measured in the following way.

### Vertical orientation degree of short fibre

The vertical orientation degree of the short fibre was measured by cutting the axial part of the stud along its axial line, observing the resultant section with an SEM (Scanning Electron Microscope), drawing imaginary horizontal lines at respective heights of 1 mm, 3 mm, and 5 mm from the ground-contacting face; measuring the number of short fibres, which are tangent to or traverse these horizontal lines, as well as the respective tilts of such fibres, and determining the average value of the tilts. Then, the short fibres were classified into those which were oriented at 0°C, at a tilt within the range of ±10°, and outside the tilt range of ±10°, respectively, and the respective percentage of the classified fibres were calculated.

### Degree of damage of stud

After running, the stud was pulled out of the tyre, and the weight of the stud was measured. This weight was compared with that of a new stud (0.300 g), and the difference between them was regarded as the amount of the abrasion (unit: g). For example, as to Example 2, the weight of the stud was 0.290 g after running of 100 km, so the amount of abrasion was 0.010 g.

### Degree of damage of pavement

"Safety Walk (type B)" (thickness: 5.0 mm), made by Sumitomo 3M Co Limited, of which the surface was as rough as that of sand paper, was attached to a drum of a drum test machine, and the tyre was then allowed to run on this drum. The resultant difference between the residual thickness and the initial thickness of the "Safety Walk" (unit: mm) was defined as the amount of the abrasion of the pavement. For example, the residual thickness after a running of 100 km in Example 2 was 4.9 mm, so the amount of the abrasion was 0.1 mm.

If the evaluation results of Example 2 are compared with those of Comparative Example 3, it should be understood that a stud in which a short fibre is combined was superior to a short-fibre-free stud with regard to the index of the deceleration on ice and to the evaluation of the actual running on ice.

From the comparison of the evaluation results of Example 3 with those of Comparative Example 4, it should be understood that where the short fibre is too short and its aspect ratio is too small, the vertical orientation degree of the short fibre is deteriorated, the stud is greatly damaged and abraded, and the index of the deceleration on ice and the evaluation of the actual running on ice are both inferior.

From the comparison of the evaluation results of Example 3 with those of Comparative Example 5, it should be understood that where the short fibre is too long and its aspect ratio is too large, the vertical orientation degree of the short fibre is improved, but the stud is greatly damaged and abraded due to the running, and that in such a case, the stud is reinforced too strongly with the long, short fibre, so the stud is too hard and therefore greatly damages a pavement.

On the other hand, if the aspect ratio of the short fibre is within the range of 10 to 500 as in Examples 3 to 5, the length of the projection of the stud after running, the index of the deceleration on ice, and the degree of damaged of the pavement are all well-balanced with each other.

From the comparison of the evaluation results of Examples 3 and 6 with each other, it should be understood that the treatment of a surface of the short fibre with the RFL lessens both the damage and the abrasion of the stud which might be caused by running.

From the comparison of the evaluation results of Examples 3 and 7 with each other, it should be understood that the performance of a short fibre comprising vinylon is near the performance of a short fibre comprising aramid, but that the modulus of vinylon is smaller than that of aramid (KEVLAR), so vinylon provides somewhat inferior results with regard to the index of the deceleration on ice and the evaluation of the actual running on ice.

Various details of the invention maybe changed without departing from its scope as defined by the appended claims. Furthermore, the foregoing description of the preferred embodiments according to the present invention is provided for the purpose of illustration only, and not for the purpose of limiting the invention as defined by the appended claims and their equivalents.

## Claims

1. A tyre stud (1), which is a moulded product of a vulcanised rubber (1a) and is reinforced with short fibre (1b), **characterised in that** the short fibres have a diameter of 1 to 50 µm, a length of 100 to 3,000 µm, and an aspect ratio of 10 to 500, and are oriented substantially vertically to a ground-contacting face of the stud.

2. A tyre stud according to claim 1, **characterised in that** the short fibres comprise at least one of the materials selected from the group consisting of nylon, polyester, rayon, aramid, vinylon and cotton.

3. A tyre stud according to claim 1 or 2, **characterised in that** the short fibres are oriented at tilt angles of up to of ±10° with respect to a vertical line of the ground-contacting face of the stud.

4. A process for producing a tyre stud (1), **characterised by** the step of extruding a rubber composition from a die having a diameter of 8 mm or less; cutting the resultant pole-shaped product into a length of 9 to 14.5 mm and placing the resultant short cut product into a mould; and wherein the rubber composition comprises a rubber component (1a) and reinforcing short fibres (1b) which have a diameter of 1 to 50 µm, a length of 100 to 3,000 µm, and an aspect ratio of 10 to 500.

5. A rubber composition for producing an anti-slip stud according to any of claims 1 to 3; said rubber composition comprising a rubber component and reinforcing short fibres **characterized in that** the reinforcing short fibers have a diameter of 1 to 50 µm, a length of 100 to 3,000 µm, and an aspect ratio of 10 to 500.

6. A tyre (2) for snow and ice, which is an anti-slip tyre comprising a ring-shaped tyre body (21) having holes (23) which are opened at intervals on a ground-contacting face (22) of the tyre, and **characterised by** anti-slip studs, according to any of claims 1 to 3, being embedded in the holes and projecting partially therefrom.

## Patentansprüche

1. Reifen-Spike (1), der ein geformtes Erzeugnis aus einem vulkanisierten Kautschuk (1a) und mit Kurzfasern (1b) verstärkt ist, **dadurch gekennzeichnet, dass** die Kurzfasern einen Durchmesser von 1 bis 50 µm, eine Länge von 100 bis 3 000 µm und einen Aspektverhältniswert von 10 bis 500 aufweisen und im Wesentlichen vertikal zu einer Bodenberührungsfläche des Spikes ausgerichtet sind.

2. Reifen-Spike nach Anspruch 1, **dadurch gekennzeichnet, dass** die Kurzfasern mindestens ein Material aus der aus Nylon, Polyester, Reyon, Aramid, Vinylon und Baumwolle bestehenden Gruppe von Materialien enthalten.

3. Reifen-Spike nach einem der Ansprüche 1 oder 2, **dadurch gekennzeichnet, dass** die Kurzfasern mit Schrägwinkeln von bis zu ±10° mit Bezug auf eine vertikale Linie zur Bodenberührungsfläche des Spikes ausgerichtet sind.

4. Verfahren zum Herstellen eines Reifen-Spikes (1), **gekennzeichnet durch** den Schritt, dass eine Kautschukmasse aus einem Mundstück mit einem Durchmesser von 8mm oder weniger extrudiert wird; dass das entstandene stabförmige Produkt auf eine Länge von 9 bis 14,5 mm geschnitten und das entstandene kurz geschnittene Produkt in eine Form eingesetzt wird; wobei die Kautschukmasse eine Kautschuk-Komponente (1a) und Verstärkungs-Kurzfasern (1b) mit einem Durchmesser von 1 bis 50 µm, einer Länge von 100 bis 3 000 µm und einem Aspektverhältniswert von 10 bis 500 umfasst.

5. Kautschukmasse zum Herstellen eines Gleitschutz-Spikes nach einem der Ansprüche 1 bis 3, wobei die Kautschukmasse eine Kautschuk-Komponente und Verstärkungs-Kurzfasern umfasst, **dadurch gekennzeichnet, dass** die Verstärkungs-Kurzfasern einen Durchmesser von 1 bis 50 µm, eine Länge von 100 bis 3 000 µm und einen Aspektverhältniswert von 10 bis 500 aufweisen.

6. Schnee/Eis-Reifen (2), der ein Gleitschutz-Reifen ist mit einem ringförmigen Reifenkörper (21) mit Löchern (23), die in Intervallen an einer Bodenaufstandsfläche (22) des Reifens vorgesehen sind, und **gekennzeichnet durch** Gleitschutz-Spikes gemäß einem der Ansprüche 1 bis 3, die in die Löcher eingebettet sind und teilweise von diesen vorstehen.

## Revendications

1. Clou (1) de pneumatique, qui est un produit moulé de caoutchouc vulcanisé (1a) et qui est armé de courtes fibres (1b) , **caractérisé en ce que** les courtes fibres ont un diamètre de 1 à 50 µm, une longueur de 100 à 3 000 µm, et un rapport d'allongement compris entre 10 et 500, et sont orientées en direction pratiquement perpendiculaire à une face de contact avec le sol du clou.

2. Clou de pneumatique selon la revendication 1, **caractérisé en ce que** les courtes fibres comportent au moins l'un des matériaux choisis dans le groupe constitué par le "Nylon", le polyester, la rayonne, l'aramide, le "Vinylon" et le coton.

3. Clou de pneumatique selon la revendication 1 ou 2, **caractérisé en ce que** les courtes fibres sont orientées avec des angles d'inclinaison pouvant atteindre ±10° par rapport à une perpendiculaire à la surface de contact avec le sol du clou.

4. Procédé de production d'un clou (1) de pneumatique, **caractérisé par** l'étape d'extrusion d'une composition de caoutchouc avec une filière ayant un diamètre inférieur ou égal à 8 mm, la découpe du produit résultant en forme de bâtonnet à une longueur de 9 à 14,5 mm, et la disposition du court produit coupé résultant dans un moule, et dans lequel la composition de caoutchouc comprend un ingrédient (1a) de caoutchouc et de courtes fibres d'armature (1b) qui ont un diamètre compris entre 1 et 50 µm, une longueur comprise entre 100 et 3 000 µm et un rapport d'allongement compris entre 10 et 500.

5. Composition de caoutchouc destinée à la production d'un clou antidérapant selon l'une quelconque des revendications 1 à 3, la composition de caoutchouc contenant un ingrédient de caoutchouc et de courtes fibres d'armature, **caractérisée en ce que** les courtes fibres d'armature on un diamètre de 1 à 50 µm, une longueur de 100 à 3 000 µm et un rapport d'allongement compris entre 10 et 500.

6. Pneumatique (2) destiné à rouler sur la neige et la glace, qui est un pneumatique antidérapant comprenant un corps de pneumatique (21) de forme annulaire ayant des trous (23) qui débouchent à certains intervalles à une face (22) de contact avec le sol du pneumatique, **caractérisé par** des clous antidérapants selon l'une quelconque des revendications 1 à 3, enrobés dans les trous et dépassant partiellement de ceux-ci.
